(19) Europäisches Patentamt
European Patent Office
Office européen des brevets

(11) **EP 1 782 911 A2**

(12) **EUROPEAN PATENT APPLICATION**

(43) Date of publication:
**09.05.2007 Bulletin 2007/19**

(51) Int Cl.:
***B23K 31/00*** *(2006.01)*          ***B23K 31/12*** *(2006.01)*

(21) Application number: **06022557.0**

(22) Date of filing: **28.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **03.11.2005 US 266721**

(71) Applicant: **Thermatool Corp.
East Haven CT 06512 (US)**

(72) Inventors:
• **Scott, Paul
Farmington, CT 06032 (US)**
• **Nallen, Michael
Old Saybrook, CT 06475 (US)**

(74) Representative: **Köhler, Walter
Louis, Pöhlau, Lohrentz
Patentanwälte
Postfach 30 55
90014 Nürnberg (DE)**

(54) **Method and system for monitoring and controlling characteristics of the heat affected zone in a weld of metals**

(57) Method and system for monitoring and controlling at least one of the plurality of quantifiable heat affected zone ("HAZ") characteristics in a weld of metal pieces provides a user with information concerning at least a first quantifiable HAZ characteristic for a weld, and also provides for control of an operating condition of a welding apparatus to obtain a weld having a quantifiable HAZ characteristic that satisfies success criteria relating to performance of the fabricated component.

**FIG. 3**

**Description**

**FIELD OF THE INVENTION**

The present invention relates generally to welding of metal pieces and, more particularly, to monitoring and controlling quantifiable characteristics of the heat affected zone in a weld of metal pieces.

BACKGROUND OF THE INVENTION

Welding is a well known process that is performed to join two or more pieces of metal. In welding, the metal pieces, which can have the same or different metallurgical properties, are heated to their melting temperature(s). Then, a prescribed amount of pressure is applied to the metal pieces to bring them in contact, which causes materials from the metal pieces to flow together and become intermingled. Subsequently, the metal pieces are cooled, which causes the region where the materials from the metal pieces flowed together to solidify and, therefore, bind the metal pieces.

There are many well known processes for welding metal pieces, such as arc welding, spot welding, laser welding and forge welding. The characteristics of a weld created by performing any welding process are a function of the following welding process factors: geometry and material (metallurgical) properties of the pieces to be welded; the welding apparatus used to perform the weld; the operating conditions at the welding apparatus when the weld is performed; and the experience of the operator (welder) using the welding apparatus. The welding process factors are variables that affect the transformation of the metal(s) that occurs during the welding process and, thus, determine the characteristics of the weld.

For example, in forge welding where high frequency electrical currents are used to heat the portions to be welded together, see, for example, U.S. Patent Nos. 2,774,857, 3,037,105 and 4,197,441, incorporated by reference herein, the wall thickness and outer diameter of a tube that would be obtained when a metal sheet or strip is folded so that the edge portions meet at a weld point as the strip is advanced longitudinally impact the characteristics of a weld. In addition, in high frequency forge welding each of the frequency of the electrical current ("welding frequency"), the power of the current ("welding power") and speed with which the metal portions are advanced through the weld point ("mill speed") affects the characteristics of a weld. In spot welding, the duty cycle of the electric current applied to the metal pieces affects the characteristics of the weld. In torch welding, the geometry of the flame and the speed with which the flame is moved over the metal pieces to be joined affect the characteristics of the weld.

It is well known in the welding art that the characteristics of a weld define the performance of the fabricated component. A well known technique in the art for determining whether a weld satisfies success criteria relating to the performance of the fabricated component is to examine the characteristics of the heat affected zone ("HAZ") of the weld that is created in all welding processes. The HAZ contains the metal(s) whose microstructure and mechanical properties were altered by the heat applied to make the weld. The characteristics of the HAZ include quantifiable characteristics such as width, profile (shape) and material (metallurgical) properties, which include hardness, ductility, toughness and strength.

The welding industry has recognized that a weld satisfying success criteria can be obtained by controlling one or more of the quantifiable HAZ characteristics for the weld. Currently, however, whether a quantifiable HAZ characteristic of a weld satisfies success criteria can be determined only after a weld is created and only by destructive segmentation of the weld. Therefore, unless an operator of a welding apparatus examines a weld by destructive segmentation, the operator must rely solely upon experience to obtain a weld that satisfies success criteria. Although the operator generally knows conditions for the welding process factors that previously obtained a weld satisfying success criteria, when requirements for the welding process factors change, such as, for example, the mill speed at which a forge welding apparatus will need to operate and the wall thickness of the tube that the forge welding apparatus will need to produce, the operator no longer has the knowledge that would enable him to know how to modify the conditions of the welding process factors, such as how to adjust the balance of welding frequency and welding power at a forge welding apparatus, to obtain a weld satisfying success criteria. The operator can only use knowledge of conditions for the welding process factors that would obtain a weld satisfying success criteria in isolation. When the requirement for a welding process factors is changed, the operator does not have any knowledge of, or have available a method for determining, how to change the condition of any of the other welding process factors so that one or more of the quantifiable HAZ characteristics of the weld continue to satisfy the success criteria.

Therefore, there exists a need for an inexpensive and convenient to use tool that an operator of a welding apparatus can use to increase the probability that use of the welding apparatus obtains a weld where one or more of the quantifiable HAZ characteristics for the weld satisfies success criteria relating to performance of the fabricated component. A tool desirably would provide the operator of the welding apparatus with a method for monitoring at least one of the quantifiable characteristics of the HAZ based on the conditions of welding process factors for a weld, and inform the operator of adjustments to the conditions of the welding processing factors that should obtain a weld where the at least one quantifiable HAZ characteristic satisfies success criteria relating to the performance of the fabricated component. In addition, a tool desirably would provide a method for controlling, manually or automatically, the condition of one or more of the welding process factors so as to modify at least one of the quantifiable HAZ characteristics and obtain a weld where the at least one quantifiable HAZ characteristic satisfies success criteria relating to performance of the fabricated component.

SUMMARY OF THE INVENTION

In accordance with the present invention, system and method for monitoring at least one of the quantifiable characteristics of the heat affected zone ("HAZ") in a weld of metal pieces provides a user, such as an operator of a welding apparatus, with information on conditions of welding process factors that should obtain a weld having at least one quantifiable HAZ characteristic that satisfies success criteria relating to performance of the fabricated component. The system for monitoring the HAZ characteristics ("HAZ monitoring system"), for a set of conditions of welding process factors for a weld, where the welding process factors include geometry and material properties of metal pieces and operating conditions of a welding apparatus, determines a predicted value for at least one quantifiable HAZ characteristic of a set of quantifiable HAZ characteristics for the weld. The determination of the predicted HAZ characteristic value includes use of a predictive HAZ characteristic function. The predictive HAZ characteristic function is an analytically or an empirically derived function, and relates a first subset of welding process factors for a weld to the at least one quantifiable HAZ characteristic. The empirically derived predictive HAZ characteristic function is preferably based on data representative of conditions of welding process factors for previously performed welds. In addition, the HAZ monitoring system determines an optimal value for the at least one quantifiable HAZ characteristic for a weld to be performed with the metal pieces. The determination of the optimal HAZ characteristic value includes use of an optimal HAZ characteristic function. The optimal HAZ characteristic function is an analytically or an empirically derived function, and relates a second subset of welding process factors to the at least one quantifiable HAZ characteristic; where the first and second subsets of welding process factors can include the same or different welding process factors. The empirically derived optimal HAZ characteristic function is preferably based on data representative of conditions of welding process factors for previously performed welds where the at least one quantifiable HAZ characteristic satisfies the success criteria. The HAZ monitoring system indicates to the user, preferably on a display, quantities related to the predicted and optimal values for the at least one quantifiable HAZ characteristic.

In a further preferred embodiment, the HAZ monitoring system displays on the display at least one operating condition of the welding apparatus of which the at least one quantifiable HAZ characteristic is a function, and in substantially real time displays a change to the quantity related to the predicted value for the at least one quantifiable HAZ characteristic based on a change to the at least one operating conditions of the welding apparatus.

In accordance with another aspect of the present invention, system and method for controlling at least one of the quantifiable HAZ characteristics of a weld of metal pieces provides that at least one operating condition of the welding apparatus is controllable, automatically or manually, to provide at least one quantifiable HAZ characteristic for a weld satisfying the success criteria. The system for controlling the HAZ characteristics ("HAZ control system") determines a predicted value for the at least one quantifiable HAZ characteristic for a weld, and an optimal value for the at least one quantifiable HAZ characteristic for the weld to be performed, in the same or substantially the manner as performed in the HAZ monitoring system. Further, the HAZ control system provides for control of at least one of the operating conditions of the welding apparatus, such that the predicted value of the at least one quantifiable HAZ characteristic for a weld can be modified with respect to the optimal value of the at least one quantifiable HAZ characteristic for a weld to be performed.

In a preferred embodiment, the HAZ control system automatically controls at least one of the operating conditions of the welding apparatus so that the predicted value of the at least one quantifiable HAZ characteristic matches or substantially matches the optimal value for the at least one quantifiable HAZ characteristic.

In another preferred embodiment, the HAZ control system displays on a display quantities representative of the predicted and optimal values of the at least one quantifiable HAZ characteristic.

In a further preferred embodiment, the HAZ monitoring system or the HAZ control system includes a microcontroller which is coupled to a graphical user interface ("GUI") and which can be coupled to a welding apparatus, where the welding apparatus is preferably a part of either of the systems. The microcontroller determines a predicted value for the at least one quantifiable HAZ characteristic using a predicted HAZ characteristic function and data representative of conditions of the welding process factors that are stored in a memory or have been measured and provided by the user. In addition, the microcontroller determines an optimal value for the at least one quantifiable HAZ characteristic using an optimal HAZ characteristic function. The microcontroller further includes, or is coupled to, at least one control element, such as a discrete knob or a virtual control bar displayed on the GUI, that the user can control, or the microcontroller automatically controls, to modify at least one of the operating conditions of the welding apparatus so that the predicted value for the at least one quantifiable HAZ characteristic matches or substantially matches the optimal value for the at least one quantifiable HAZ characteristic.

BRIEF DESCRIPTION OF THE DRAWINGS

Other objects and advantages of the present invention will be apparent from the following detailed description of the presently preferred embodiments, which description should be considered in conjunction with the accompanying drawings in which like references indicate similar elements and in which:

FIG. 1 illustrates exemplary, prior art formation of a tube by forge welding together opposing longitudinal edges of a metal plate or strip.

FIG. 2(a) illustrates parameters associated with the forge welding together of the opposing longitudinal edges of a metal plate or strip to form the tube of FIG. 1.

FIG. 2(b) is a cross-section of the tube of FIG. 2(a) taken along line A-A.

FIG. 3 is a block diagram of an exemplary preferred embodiment of a heat affected zone characteristic monitoring and control system in accordance with the present invention.

FIG. 4 is a flow diagram of an exemplary preferred method of operating the apparatus of FIG. 3 in accordance with the present invention.

FIG. 5 is an exemplary preferred display of controls for welding process factors, conditions of welding process factors for a weld and quantities representative of HAZ characteristics of a weld, as generated by the system of FIG. 3 in accordance with the present invention.

DETAILED DESCRIPTION OF THE INVENTION

The present invention of system and method for monitoring and/or controlling at least one quantifiable HAZ characteristic in a weld of metal pieces, so as to provide an operator of a welding apparatus a diagnostic tool and/or to provide that at least one of the operating conditions of the welding apparatus can be controlled to obtain a weld where the at least one quantifiable HAZ characteristic satisfies success criteria relating to the performance of the fabricated component, is applicable to any welding process for joining metal pieces. For ease of understanding of the present invention, the features of the invention of monitoring and controlling the quantifiable HAZ characteristics in a weld of metal pieces are illustrated and exemplified below in connection with the well known technique of fabricating a tube or pipe from a strip of metal using a forge welding apparatus. It is be understood that the weld of metal pieces obtained by any welding process can be defined by a set of quantifiable HAZ characteristics and that, in accordance with the present invention, the quantifiable HAZ characteristics for any weld can be used diagnostically to predict whether conditions of welding process factor for a weld should satisfy success criteria, and also can be used to control at least one of the operating conditions of a welding apparatus to provide that at least one of the quantifiable HAZ characteristics for a weld satisfies success criteria.

For clarity and to provide a background for highlighting the features of the present invention, the well known forge welding process, including the welding process factors associated with forge welding and the quantifiable HAZ characteristics that define a weld obtained from forge welding, is initially described.

When a forge welding process is performed to obtain a welded tube, metal pieces, such as plates, fins to tubes, etc., or edge portions of the same piece, are folded so that the edge portions meet at a weld point as such latter piece is advanced longitudinally of the piece, e.g., when a metal sheet or strip is folded into a tube and the strip is advanced in the direction of the axis of the tube. The metal pieces, or portions of a metal piece, to be welded together are heated to forge welding temperature, or just below the melting temperature of the metal(s), by a high frequency electrical current which is caused to flow in the portions either by contacts engaging the parts or by an induction coil which induces the current in the parts. See, for example, U.S. Patent Nos. 2,774,857, 3,037,105 and 4,197,441, incorporated by reference herein. Specifically, in high frequency forge welding, the high frequency electrical current is caused to flow in opposite directions on the opposing faces of the metal portions to be joined or welded together to take advantage of the well known proximity effect, which causes the oppositely flowing currents to be concentrated at the faces, and also the well known skin effect. By applying pressure to the edges of the strip, which are at about melting temperature, as the edges are advanced past the weld point, a continually formed forged weld results such that the strip takes the form of a tube or pipe.

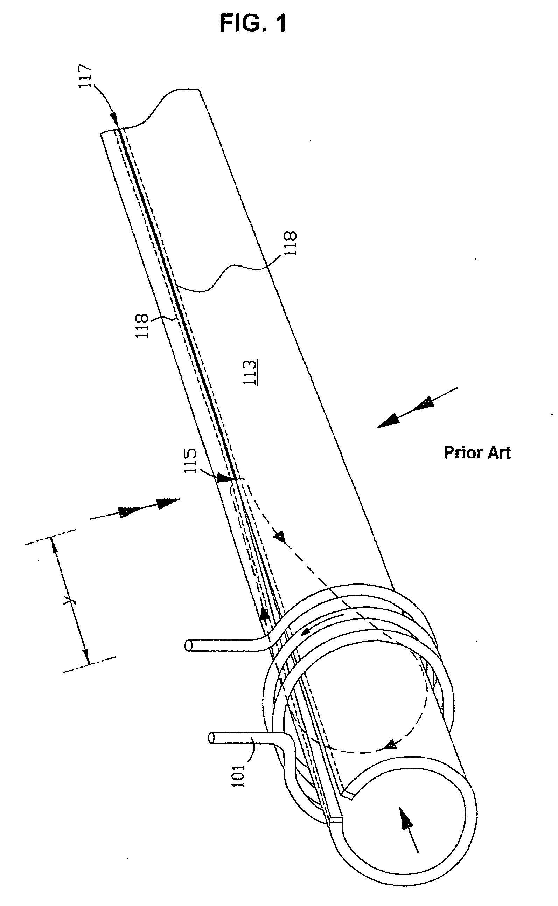

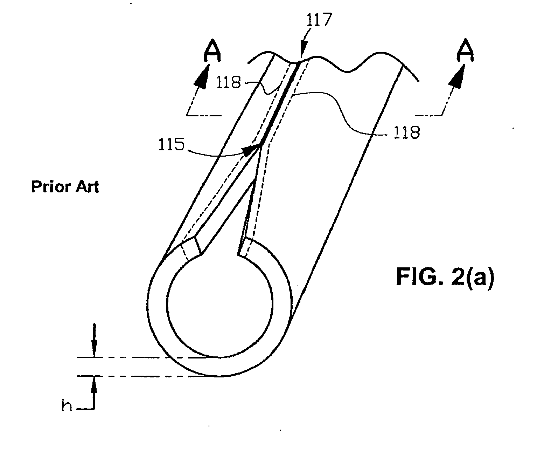

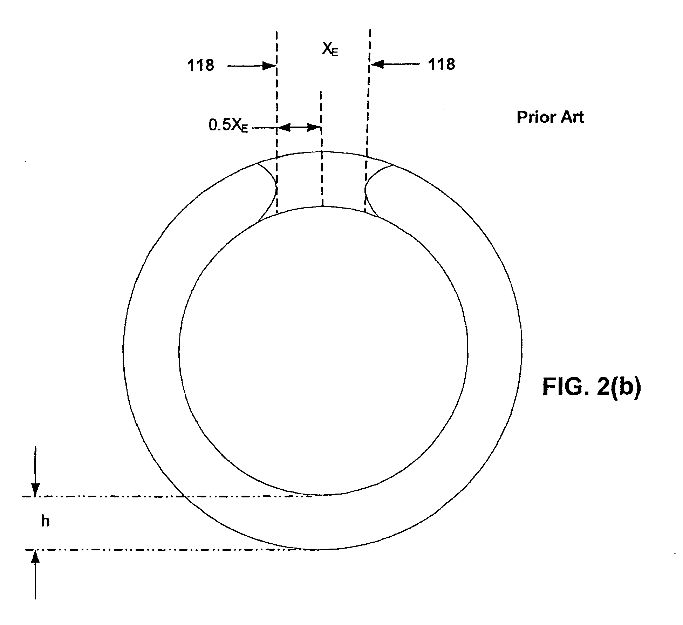

FIG. 1 illustrates an exemplary, prior art forge weld where a tube 113 is formed from a metal strip forced together at a weld point 115 to form a weld seam 117 as the strip advances in the direction of the single headed arrow and pressure is applied in the directions indicated by the double headed arrows to force the edge portions of the strip together. Referring to FIG. 1 and also to FIG. 2(a), which illustrates parameters associated with the forge welding of the tube of FIG. 1, a "V" shaped region, known as a weld vee, forms when the edges of the strip are forced together based on the supply of induction power from a suitable ac power source to induction coil 101 to induce current in the metal around the "V" shaped region. The induced current flows around the back of the tube and then along the open "V" shaped edges to the weld point 115. The length, y, of this "V" shaped region, or vee length, is approximately equal to the distance between the end of the coil closest to the weld point and the weld point.

As is well known in the art, the characteristics of the heat affected zone of a weld, which contains the metal(s) whose microstructure and mechanical properties were altered by the heat to make the weld, define the characteristics of the weld, and in turn, the performance of the fabricated component. The HAZ characteristics for any weld of metal pieces, such as the weld obtained by forge welding, include a set of quantifiable HAZ characteristics, such as, for example, width, profile (shape) and material (metallurgical) properties, which include hardness, ductility, toughness and strength.

For example, in forge welding the width of the HAZ is an important parameter that metallurgists for many years have used to characterize the weld in a welded pipe and tube, because the HAZ width was found to be a primary indication of whether the performance of the fabricated component would be satisfactory. Thus, success criteria for a forge weld became linked to its HAZ width. Referring to FIGs. 1 and 2(a), dotted lines 118 indicate the generalized outer boundary of the HAZ on either side of the weld seam 117. Referring to FIG. 2(b), which is a cross-section of the weld of the forge welded tube of FIG. 1, the tube 113 has a HAZ width, $X_E$, equal to the distance between the outer boundary lines 118. While in practice the outer boundaries of the HAZ may not be uniformly linear along the entire length of the weld, the HAZ width may be generally approximated by linear boundary lines, such as the lines 118, and is commonly called the HAZ waist width.

It is also well known that the conditions of the welding process factors for a welding situation impact the quantifiable HAZ characteristics of a weld. In the forge welding situation, for example, the welding processing factors include (i) the operating conditions of the forge welding apparatus, such as the frequency of the electrical current ("welding frequency"), the energy of the current ("welding power"), the speed with which the edges of the strip are moved past the weld point in the welding apparatus ("mill speed"), the vee length and the air gap length and angle at the welding point; and (ii) the geometry and material properties of the strip, such as the strip thickness or wall thickness of the resultant welded tube. As the forge welding process has been extended to the fabrication of tubes having: (i) very high or very low tube diameter to wall thickness ratios; (ii) complex metallurgies, such as found in tubes used for automobile exhaust systems; and (iii) a precoated strip, such as zinc coated low carbon steel used for a galvanized tube or aluminum coated steel used for an aluminized tube or oil country tubular goods, tube weld quality problems often have arisen because of the unsuitability of the heating temperature profile used to make the weld. The temperature profile, which is function of the conditions of the welding process factors, directly relates to and impacts the width, shape (profile) and metallurgical properties of the HAZ for a forge weld.

Oftentimes, restrictions are placed on one or more of the welding process factors for a welding situation. For example, in forge welding a certain material type may be required and a forge welding apparatus may be required to operate at a prescribed mill speed. In addition, there are well known practical restrictions on how small the vee length can be made at a forge welding apparatus.

Also well known in the welding art is the technique of modifying a condition of a welding process factor so as to, in turn, cause a change in a quantifiable HAZ characteristic of a weld. For example, in a high frequency forge welding process, it has been recognized that the welding frequency can be used to control the HAZ characteristics, such as the HAZ width, of the weld. In forge welding, lowering the welding frequency flattens the temperature distribution in the HAZ, causes the HAZ to penetrate more deeply into the weld vee edge and creates a larger but smoother inside weld bead. In contrast, increasing the welding frequency in a forge welding process narrows the HAZ, tends to give the HAZ a more hour glass-like shape, and furthermore provides that the weld vee temperature distribution becomes steeper, the corners of the vee edges become hotter and the inside weld bead becomes smaller but less smooth. In addition, it has been found that the welding frequency in a forge welding process has a considerable affect upon other characteristics of the fabricated pipe or tube, such as the amount of "bluing" of heavier wall tubes, saturation of the impeder, etc.

In a particular welding situation, the most desirable welds have quantifiable HAZ characteristics that those in the welding industry found to satisfy success criteria relating to the performance of the fabricated component. Alternatively, the most desirable weld may be a compromise between quantifiable HAZ characteristics that satisfy success criteria and other weld quality parameters. For ease of reference, the state of a quantifiable HAZ characteristic for a weld to be performed that was found to satisfy success criteria relating to the performance of the fabricated component is hereinafter referred to as the optimal HAZ characteristic value.

In the practice of a welding process, a properly selected condition for one or more welding process factors can solve a welding problem by favoring certain HAZ characteristics of the weld that significantly improve weld quality. The condition of a welding process factor that should obtain a weld having a quantifiable HAZ characteristic that is at or near the optimal value for the quantifiable HAZ characteristic, however, usually is not known or readily determined by the operator of the welding apparatus. Although the operator may know a set of operating conditions for the welding apparatus that should obtain the optimal value for a quantifiable HAZ characteristic for a weld formed from metal pieces having a certain geometry and material properties, the operator likely would not know, and the welding prior art does not provide a tool or other device that would allow the operator to determine with ease, how to modify one or more of the operating conditions of the welding apparatus so that the quantifiable HAZ characteristic for a weld is maintained at or near the optimal value when a specific welding process factor is needed or has been changed. For example, if there was a new requirement for one of the operating conditions for a welding apparatus, the operator would not know how to adjust the other operating conditions so that a weld still has an optimal value for a specific quantifiable HAZ characteristic.

To illustrate, in forge welding it is known that a properly selected welding frequency can solve welding problems by favoring certain characteristics of the weld which significantly improve pipe or tube weld quality, because the welding frequency greatly impacts the HAZ width of a weld and the HAZ width is a primary indicator of success for a weld. For a given set of conditions of welding process factors, however, the operator of the forge welding apparatus most likely does not know at what welding frequency to operate the forge welding apparatus so that the weld has a HAZ width that matches or substantially matches what is considered to be an optimal HAZ width for the weld to be performed. Although the operator may know the welding frequency that should give the optimal HAZ width for one set of operating conditions for the forge welding apparatus where certain metal pieces are used, the welder usually does not know, and cannot easily determine how to modify the welding frequency based on, for example, a changed requirement for the mill speed, so that an optimal or close to optimal HAZ width is achieved for the weld. For example, although the operator may know that, for a specific low carbon steel tube product, the operating conditions of mill speed, vee length and welding frequency are most influential on the HAZ width, the operator would not know, and could not determine without performing destructive segmentation of test run welds, at what welding frequency the welding apparatus should be operated to obtain a weld having an optimal HAZ width.

In accordance with the present invention, at least one of the quantifiable HAZ characteristics for a weld is monitored and the operator of a welding apparatus is provided with information, such as on a display, relating to (i) a predicted value for the at least one quantifiable HAZ characteristic, which is determined using a given set of conditions of welding process factors for the weld; and (ii) an optimal value for the at least one quantifiable HAZ characteristic for the weld to be performed. The invention also preferably shows on the display the influence that a change in the condition of one more welding processing factors should have on the predicted value of the at least one quantifiable HAZ characteristic for the weld in relation to the optimal value for the at least one quantifiable HAZ characteristic for the weld to be performed. According to the invention, the predicted value for the at least one quantifiable HAZ characteristic for a set of conditions of welding process factors is determined using a predictive HAZ characteristic function. The predictive HAZ characteristic function is an analytically or empirically derived function, and relates a first subset of the welding process factors to the at least one quantifiable HAZ characteristic. Further according to the invention, the optimal value for the at least one quantifiable HAZ characteristic is determined using an optimal HAZ characteristic function. The optimal HAZ characteristic function also is an analytically or empirically derived function, and relates a second subset of the welding process factors to the at least one quantifiable HAZ characteristic. In preferred embodiments, the first and second subsets of the welding process factors are the same or different. The invention, in addition, provides that one or more of the operating conditions of a welding apparatus is controllable, manually or automatically, so that the predicted value for the at least one quantifiable HAZ characteristic can be modified to match or substantially match the optimal value for the at least one quantifiable HAZ characteristic. In a preferred embodiment, an operating condition of a welding apparatus being controlled, and quantities related to the predicted and optimal values for the at least one quantifiable HAZ characteristic are displayed.

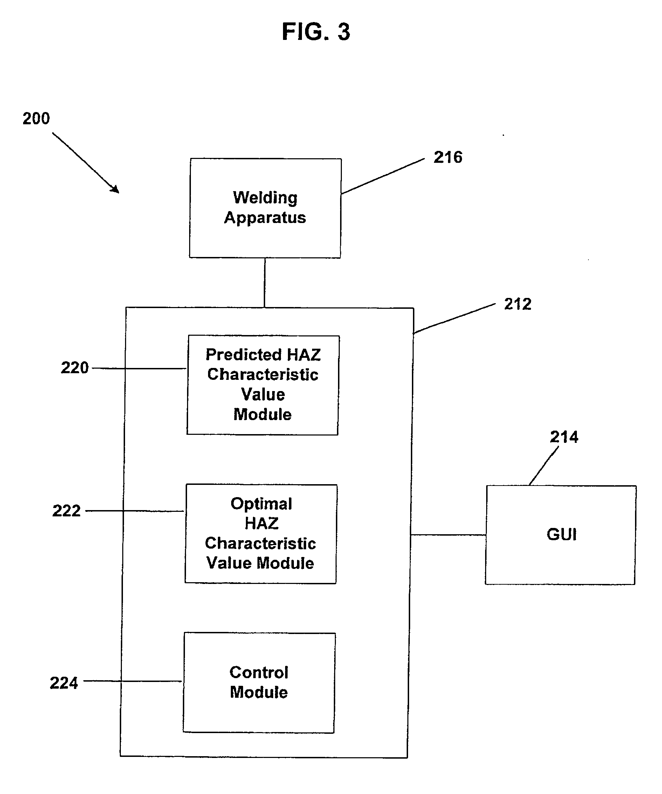

FIG. 3 is a functional block diagram of an exemplary, preferred system 200 for monitoring and/or controlling at least one quantifiable HAZ characteristic of a weld of metal pieces in accordance with the present invention. Referring to FIG. 3, the system 200 includes a microcontroller 212 coupled to a graphical user interface ("GUI") 214 and a welding apparatus 216.

The microcontroller 212 is a conventional data processing device that includes input devices, such as a mouse, keyboard or input dials (not shown), a processor and a memory. The processor executes software instructions stored in the memory, and uses data representative of conditions of welding processing factors provided from an input device or stored in the memory. The microcontroller 212, in the illustrated preferred embodiment, includes a predicted HAZ characteristic value module 220, an optimal HAZ characteristic value module 222 and a control module 224 which perform the data processing operations discussed below.

It is to be understood that each of the modules of the system 200 which is described below as performing data processing operations is a software module or, alternatively, a hardware module or a combined hardware/software module. In addition, each of the modules suitably contains a memory storage area, such as RAM, for storage of data and instructions for performing processing operations in accordance with the present invention. Alternatively, instructions for performing processing operations can be stored in hardware in one or more of the modules in the assembly 200. Further, the microcontroller 212 and the modules therein can be replaced by analog or digital circuitry designed to perform processing operations in accordance with the present invention.

The GUI 214 is a conventional device, such as an LCD monitor, for displaying data supplied by the microcontroller 212. In a preferred embodiment, the GUI 214 forwards to the microcontroller 212 data representative of conditions of the welding processing factors based on interaction between the user of the system 200 and the input devices.

The welding apparatus 216 is a conventional welding apparatus. For example, the welding apparatus 216 is a variable frequency, forge welding apparatus whose welding frequency can be selected, either discretely or continuously, and maintained stable once selected. See, for example, U.S. Patent Nos. 5,902,506 and 5,954,985, incorporated by reference herein.

In an alternative embodiment, the welding apparatus 216 is not a part of the system 200, and the system 200 includes a conventional interface means (not shown) for coupling to, and monitoring and/or controlling the operation of, a conventional welding apparatus. For example, where the system 200 is implemented for monitoring and controlling quantifiable HAZ characteristics of weld obtained by performing a forge welding process, the interface monitors and/or controls, where the control is automated or based on interaction with a user, the actual welding frequency and welding power of a forge welding apparatus 216.

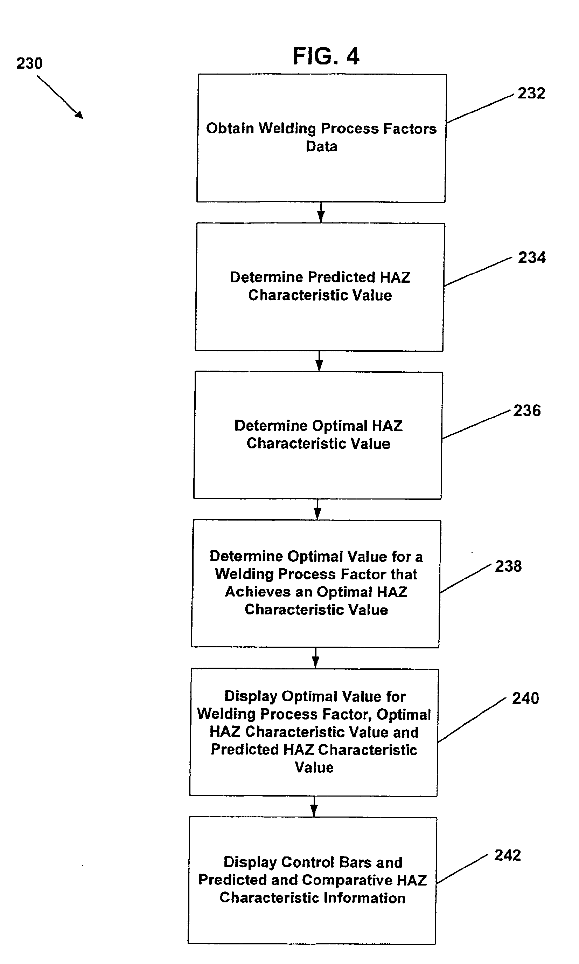

FIG. 4 is an exemplary, preferred flow process 230 that the system 200 performs, in accordance with the present invention, to provide that at least one quantifiable HAZ characteristic of a weld of metal pieces is monitored and/or controlled. The process 230 is described below in connection with the exemplary implementation of the invention to the welding situation of fabricating a welded tube or pipe by a forge welding process, and where the system 200 performs the steps of the process 230 to monitor and control the width of the HAZ, which in the forge welding art is primary indicator of whether a weld is successful, as the at least one quantifiable HAZ characteristic. It is to be understood that the process 230 is applicable for monitoring and controlling any quantifiable HAZ characteristic of a weld obtained from any welding process.

Referring to FIG. 4, in step 232 the user provides to the microcontroller 212 using an input device from measurements performed by the user, or the microcontroller 212 retrieves from a memory, information representative of conditions of the welding processing factors for a weld.

In the exemplary forge welding situation, the operator, for example, supplies to the microcontroller 212 the tube outer diameter ("OD") and the tube wall thickness ("w") for weld, which are based on user measurements, and the vee length ("$y_o$") for the forge welding apparatus 216. In an alternative preferred embodiment, at least some of the conditions of the welding processing factors, such as the mill speed ("v") of the forge welding apparatus 216, are already available to the microcontroller 212, such as in memory, or are supplied by a measurement device that is coupled to an input device of the microcontroller 212.

Referring again to FIGs. 3 and 4, in step 234, the predicted HAZ characteristic value module 220 determines a predicted value for the at least one quantifiable HAZ characteristic for the weld using a predictive HAZ characteristic function. The predictive HAZ characteristic function is analytically derived based on welding process factors, or alternatively empirically derived from conditions of welding process factors for previously performed welds. In a preferred embodiment, the predictive HAZ characteristic function is a based on data representative of a range of operating conditions for a welding apparatus and a range of material properties and geometries for metal pieces, where the data is preferably stored in a memory as a look-up table.

Returning again to the description of an exemplary implementation of the invention in a forge welding process, a predictive function for the HAZ width for a forge weld is preferably an analytically derived function which accounts for the geometry and material properties of the metal pieces of a weld, and how such geometry and material properties would change based on the generation of heat during forge welding. In a forge welding process, temperature distribution, T(x), in the vee edge at the weld point, where y is the distance down the vee and $y_o$ is the vee length, can be described as follows:

$$T(x) = \frac{\rho}{2K} H_o^2 \left[ \begin{array}{l} e^{\frac{2x}{\xi}}\left(e^{\frac{4y_o\varepsilon}{\xi^2 v}} - 1\right) + \frac{e^{\frac{4\varepsilon y_o}{\xi^2 v}}}{2}\left[e^{\frac{2x}{\xi}} erfc\left(\frac{x}{2}\sqrt{\frac{v}{\varepsilon y_o}} + \frac{2}{\xi}\sqrt{\frac{\varepsilon y_o}{v}}\right) - e^{-\frac{2x}{\xi}} erfc\left(\frac{x}{2}\sqrt{\frac{v}{\varepsilon y_o}} - \frac{2}{\xi}\sqrt{\frac{\varepsilon y_o}{v}}\right)\right] \\ + \frac{4}{\xi}\sqrt{\frac{\varepsilon y_o}{\pi v}} e^{\frac{x^2 v}{4\varepsilon y_o}} - \frac{2x}{\xi} erfc\left(\frac{x}{2}\sqrt{\frac{v}{\varepsilon y_o}}\right) \end{array} \right]$$

(1)

where:

$H_o$ is the magnetic field in the vee

$p$ is the electrical resisitivity of the tube material

$\mu$ is the magnetic permeability of the tube material

f is the welding frequency

$\xi$ is the Electrical Reference Depth in the tube material $= \sqrt{\dfrac{\rho}{\pi f \mu}}$

K is the thermal conductivity of the tube material
ε is the thermal diffusivity of the tube material
ν is the mill speed
$y_o$ is the vee length
x is the distance into the edge of the vee

At the surface of the vee edge and at the weld point, Equation (1) is evaluated at x = 0 and this result can be written as:

$$T(x=0) = \frac{\rho}{2K} H_o^2 \left[ e^{\frac{4\varepsilon y_o}{\xi^2 v}} erfc\left( \frac{2}{\xi} \sqrt{\frac{\varepsilon y_o}{v}} \right) + \frac{4}{\xi} \sqrt{\frac{\varepsilon y_o}{\pi v}} - 1 \right] \qquad (2)$$

Thus, if a temperature representing the edge of the HAZ, and another temperature that should be achieved at the vee edge in order to weld (such as the temperature that a pyrometer would measure) are defined, then a distance, $x_{HAZ}$, related to the sum of half the HAZ width and half the width of the material squeezed out from the weld zone (the squeeze out) can be found from:

$$\frac{T_{HAZ}}{T_{WELD}} = \frac{\left( e^{-\frac{2x_{HAZ}}{\xi}} \left( e^{\frac{4\varepsilon y_o}{\xi^2 v}} - 1 \right) + \frac{e^{\frac{4\varepsilon y_o}{\xi^2 v}}}{2} \left( e^{-\frac{2x_{HAZ}}{\xi}} erfc\left( \frac{x_{HAZ}}{2} \sqrt{\frac{v}{\varepsilon y_o}} + \frac{2}{\xi} \sqrt{\frac{\varepsilon y_o}{v}} \right) - e^{-\frac{2x_{HAZ}}{\xi}} erfc\left( \frac{x_{HAZ}}{2} \sqrt{\frac{v}{\varepsilon y_o}} - \frac{2}{\xi} \sqrt{\frac{\varepsilon y_o}{v}} \right) \right) + \frac{4}{\xi} \sqrt{\frac{\varepsilon y_o}{\pi v}} - \frac{2x_{HAZ}}{\xi} erfc\left( \frac{x_{HAZ}}{2} \sqrt{\frac{v}{\varepsilon y_o}} \right) \right)}{e^{\frac{4\varepsilon y_o}{\xi^2 v}} erfc\left( \frac{2}{\xi} \sqrt{\frac{\varepsilon y_o}{v}} \right) + \frac{4}{\xi} \sqrt{\frac{\varepsilon y_o}{v}} - 1} \qquad (3)$$

Equation (3) depends on the ratio, R, of the HAZ temperature to the welding temperature, where $R = \frac{T_{HAZ}}{T_{WELD}}$. Based on the recognition that the electrical reference depth, ξ, for the welding material embodies the welding frequency information, in other words, the welding frequency at which the forge welding assembly 216 would be operated, and that a user as discussed in detail below in connection with step 242 of the process 230 can control $x_{HAZ}$, which is a number related to the optimal HAZ width, the transcendental Equation (3) can be re-written in terms of two non-dimensional numbers, λ and η (defined below), to obtain the following relationship and, thus, avoid the need to solve Equation (3) by iterative or graphical methods and for all mill speeds and vee lengths. With

$$\lambda = \frac{x_{HAZ}}{2} \sqrt{\frac{v}{\varepsilon y_o}} \quad and \quad \eta = \frac{2}{\xi} \sqrt{\frac{\varepsilon y_o}{v}} = 2\sqrt{\frac{\varepsilon y_o \pi f \mu}{v \rho}},$$

we have:

$$R = \frac{e^{-2\lambda\eta}\left(e^{\eta^2}-1\right)+\frac{e^{\eta^2}}{2}\left(e^{2\lambda\mu}erfc(\lambda+\eta)-e^{-2\lambda\eta}erfc(\lambda-\eta)\right)+\frac{2\eta}{\sqrt{\pi}}e^{-\lambda^2}-2\lambda\eta\,erfc(\lambda)}{e^{\eta^2}erfc(\eta)+\frac{2}{\sqrt{\pi}}\eta-1} \quad (4)$$

It is noted that $\lambda$ depends on the input, $x_{HAZ}$, and the two known quantities, $v$ and $y_o$, while $\eta$ depends on the frequency, $f$, at which the apparatus 216 will be operated and the same two known quantities, $v$ and $y_o$. Thus, if particular values for $T_{HAZ}$ and $T_{WELD}$ are selected such that R can be calculated, the function, $\eta = g(\lambda)$, can be determined by numerical techniques and a closed form approximation can be found.

In a preferred embodiment of forge welding where the metal pieces for a weld are low carbon steel, the predictive function for the HAZ width accounts for the following observations of many forge welding processes and the welds obtained therefrom:

(1) Although the material properties of steel are very temperature dependent, it is assumed that the vee temperature is mostly above the Curie temperature (about 760° C) because the color of the steel begins to turn red above this temperature. If conventional values for low carbon steel for temperatures above the Curie temperature are used, then for low carbon steel:

$$\rho = 45 \times 10^{-6} \; Ohm - Inches$$

$$\mu = \mu_o = 32 \times 10^{-9} \; Henries / Inch$$

$$\varepsilon = 0.0077 \; Inch^2 / Second$$

(2) When welding a tube, the steel at the very edge of the vee typically is brought to about the melting point or about 2700° F (1485° C). In addition, as steel has a substantial heat of fusion, additional energy is injected into the vee edge to overcome this property while the steel is still at the melting temperature. Therefore, the heat of fusion of the steel is compensated for by raising the edge temperature an equivalent number of degrees. For example:

$$Heat \; of \; Fusion = 1.946 \times 10^9 \; Joules / meter^3$$

$$Heat \; Capacity \; at \; the \; Melting \; Temperature = 5.08 \times 10^6 \; Joules / meter^3 Degrees \; C$$

$$Temperature \; Rise \; for \; Heat \; of \; Fusion = \frac{1.946 \times 10^9}{5.08 \times 10^6} = 383 \; Degrees \; C = 727 \; Degrees \; F$$

$$Corrected \; Welding \; Temperature = 2700 + 727 = 3427 \; Degrees \; F$$

Based on many evaluations, it was found that using $\frac{T_{HAZ}}{T_{WELD}} = 0.35$ provides the best results for low carbon steel.

Finally, a closed form relationship for η = g(λ) is determined, and Equation (4) can be re-written as follows to relate λ to η for fixed R:

$$e^{-2\lambda\eta}e^{\eta^2}\left(1-\frac{1}{2}erfc(\lambda-\eta)\right)+\frac{1}{2}e^{2\lambda\eta}e^{\eta^2}erfc(\lambda+\eta)-e^{-2\lambda\eta}+\frac{2\eta}{\sqrt{\pi}}e^{-\lambda^2}-2\lambda\eta\,erfc(\lambda)$$
$$-R\left[e^{\eta^2}erfc(\eta)+\frac{2}{\sqrt{\pi}}\eta-1\right]=0 \tag{5}$$

By using linear regression techniques, an approximated function for the curve resulting from R = 0.35 can be determined. When R = 0.35, the absolute minimum value of λ when η→ ∞is 0.5045. Therefore the function for 0.55 ≤λ ≤3.0 achieves good numerical stability. Consequently, when

$$R=\frac{T_{HAZ}}{T_{WELD}}=0.35,\ \eta\cong4.32878\left(\frac{1}{\lambda^3}\right)-9.22950\left(\frac{1}{\lambda^2}\right)+7.21404\left(\frac{1}{\lambda}\right)-1.44167$$
$$for\ 0.55\le\lambda\le3.0 \tag{6}$$

or the inverse function is approximated by:

$$\lambda\cong0.0011945\left(\frac{1}{\eta^4}\right)-0.019234\left(\frac{1}{\eta^3}\right)+0.040051\left(\frac{1}{\eta^2}\right)+0.60019\left(\frac{1}{\eta}\right)+0.39496 \tag{7}$$

where $\eta=:2\sqrt{\dfrac{\varepsilon\,y_0\,\pi\,f\,\mu}{\nu\,\rho}}$ and $\lambda=\dfrac{X_{HAZ}}{2}\sqrt{\dfrac{\nu}{\varepsilon\,y_0}}$

Referring again to FIGs. 3 and 4, in step 232 of the process 230, the microcontroller 212 obtained an actual welding frequency, f, for welding by the forge welding apparatus 216. In step 234, the predicted HAZ characteristic value module 220 in step 234, determines a predicted value for the HAZ width for the forge weld of the illustrated embodiment using Equation (7) and the conditions of the welding process factors obtained in step 232, including the welding frequency.

Still referring to FIGs. 3 and 4, in step 236 the optimal HAZ characteristic value module 222 determines an optimal value for the at least one quantifiable HAZ characteristic using an optimal HAZ characteristic function. The optimal HAZ characteristic function is analytically derived based on welding process factors for the weld to be performed, or in the alternative, empirically derived from conditions of welding process factors for previously performed welds satisfying success criteria relating to performance of the fabricated product. For a weld satisfying the success criteria, the at least one quantifiable HAZ characteristic is considered to be at its optimal value. In a preferred embodiment, the optimal HAZ characteristic function is based on data representative of a range of operating conditions for a welding apparatus and a range of material properties and geometries for metal pieces for previously performed welds for which the at least one quantifiable HAZ characteristic was near or at its optimal value. In a further preferred embodiment, the representative data used to determine the optimal value for a quantifiable HAZ characteristic is stored in a memory as a look-up table.

Continuing with the illustrative implementation of the invention, in a preferred embodiment an optimal HAZ width for a weld to be performed by a forge welding process is obtained from an optimal HAZ characteristics function that is based on empirical data representative of the geometry and material properties of metal pieces and operating conditions of a forge welding apparatus for previously performed forge welds that satisfy success criteria relating to the performance of a fabricated component. Based on examination of the HAZ of many forge welds, it was found that the ratio between the width of the HAZ for a forge weld and the wall thickness of the welded tube fabricated by performing the forge welding process is constant. Also based on examination of the HAZ of many forge welds, it was found that the waist width of the HAZ, which is the parameter illustrated in FIG. 2(b) as $X_E$, is between one-third and one-quarter of the wall thickness. Additionally, it has been recognized that the optimal HAZ characteristic function must account for squeeze out, because squeeze out is an appreciable factor for smaller tubes. Based on the weld samples examined, it was found that the squeeze out is about 0.04 inches for smaller forge welded tubes, such as forge welded tubes having a diameter below about three inches. Therefore, as $X_{HAZ}$ in Equation (7) represents the sum of one-half of the HAZ width and one-half of the squeeze out, a preferred function for determining the optimal HAZ width, $XHAZ_{OPTIMAL,}$ for a forge welded tube is:

$$XHAZ_{OPTIMAL} = 0.02 + 0.15 \times \textit{Wall Thickness} \qquad (8)$$

In a preferred embodiment for the illustrative implementation of the invention for forge welding a carbon steel tube, the optimal HAZ width is obtained by limiting the tube size range to wall thicknesses between about 0.020 inches and about 0.5 inches and the tube diameter range between about 1 inch and about 6 inches, as such ranges span the size range normally welded with high frequency forge welding apparatuses having a power rating of up to about 450 kW.

Referring again to FIGs. 3 and 4, the predicted HAZ characteristic value module 220 in step 238, using a predictive HAZ characteristic function, determines a condition for a selected welding process factor that achieves the optimal HAZ characteristic value for the at least one quantifiable HAZ characteristic for the weld to be performed. Once again returning to the exemplary implementation of the invention for a forge welding process, in a preferred embodiment the module 220 in step 238 solves Equation (7) for frequency, f, using the optimal HAZ width value determined in step 236. The value for f obtained is the optimal HAZ frequency for a weld where the conditions of all of the other welding process factors are as obtained in step 232.

In step 240, the microcontroller 212 displays on the GUI 214 quantities related to the predicted and optimal values for the at least one quantifiable HAZ characteristic, as determined in steps 234 and 246, respectively, and also the optimal value for a welding process factor, as determined in step 238. In a preferred embodiment, quantities related to the predicted value for the at least one quantifiable HAZ characteristic normalized by the optimal value for the at least one quantifiable HAZ characteristic are displayed on GUI 214. In an alternative preferred embodiment, quantities related to the predicted and optimal values for the at least one quantifiable HAZ characteristic are displayed on the GUI 214 in a comparative format.

In the exemplary implementation of the invention to a forge welding process, the microcontroller 212 preferably displays on the GUI 214 quantities related to the predicted and optimal HAZ width values, as determined from Equations (7) and (8) in steps 234 and 236, respectively, and also the optimal HAZ width, as determined in step 238.

Referring again to FIG. 3, the control module 224 provides a capability for controlling one or more of the operating conditions of the welding apparatus 216. In a preferred embodiment, the control module 224 includes a control element that is in the form a dial or discrete knob, or alternatively a virtual control bar icon displayed on the GUI 214. Referring now to FIG. 4, in a preferred embodiment in step 242 the control module 224 displays a virtual control bar that the user can interact with to control an operating condition of the welding apparatus 215 of which the at least one quantifiable HAZ characteristic is a function. In operation of the system 200, the user controls the position of the control bar to modify the corresponding operating condition of the welding apparatus 216. In addition in step 242, the microcontroller 212 displays on the GUI 214, in real or substantially real time, information as to how the predicted value for the at least one quantifiable HAZ characteristic is modified in relation to the optimal value for the at least one quantifiable HAZ characteristic HAZ based on the user's control of the control bar. A new, predicted value for the at least one quantifiable HAZ characteristic is determined similarly as described for step 234 of the process 230. Further in step 242 the microcontroller 212 displays on the GUI 214, also in real or substantially real time, the optimal value for the welding process factor determined in step 240 and the actual value for the same welding process factor based on the conditions of the welding processing factors obtained in step 232 of the process 230.

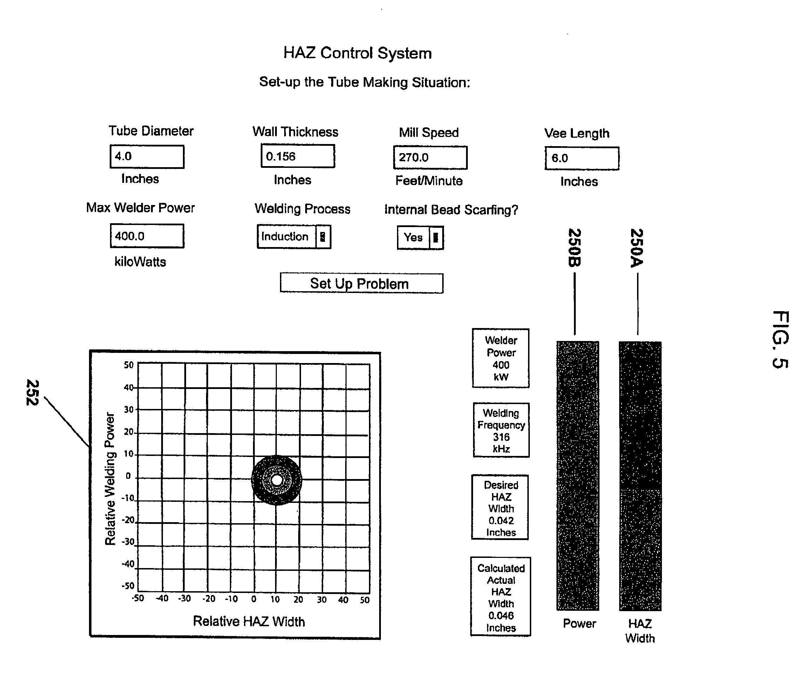

For the exemplary implementation of the invention to a forge welding process, and referring to FIG. 5 which illustrates a preferred embodiment of an implementation of step 242 in connection with a forge welding process, in step 242 the microcontroller 212 displays virtual control bars 250A and 250B on the GUI 214 for controlling the welding frequency and the welding power, respectively, of the forge welding apparatus 216. When the user modifies the position of either of the control bars 250A or 250B, such that the welding frequency or the welding power of the weld apparatus is modified, the microcontroller 212 displays, in real or substantially real time, a quantity related to the predicted value of the HAZ width using the modified welding frequency or the modified welding power, where the predicted value of the HAZ width is determined using Equation (7) as discussed above, with respect to a quantity related to the optimal HAZ width. In a further preferred embodiment, the microcontroller 212 in step 242 displays the optimal welding frequency on the GUI 214, and also shows the percentage difference between the predicted and optimal HAZ widths on a two dimensional graph 252, such as shown in FIG. 5.

In a further preferred embodiment, the microcontroller 212 causes the GUI 214 to display a normalized number that indicates the difference between the predicted value and optimal value for the at least one quantifiable characteristic. For example, in the forge welding implementation of the invention, the display of a value of "1.0" on the GUI 214 represents that a selected welding frequency provides a HAZ width equal to the optimal HAZ width. In contrast, a displayed value less than "1.0" indicates that the selected welding frequency should produce a HAZ width that is less than the optimal HAZ width, and a displayed value greater than "1.0" indicates that the selected welding frequency should produce a HAZ width greater than the optimal HAZ width.

In a preferred embodiment, the GUI 214 displays quantities related to the predicted and optimal values for the at least one quantifiable HAZ characteristic in different colors.

In a further preferred embodiment, the control module 224 in step 242 automatically controls an operating condition of the welding apparatus 214 to cause the predicted value and optimal value for the at least one HAZ characteristic value to be equal or substantially equal. For example, in the forge welding implementation of the invention, the control module 224 controls the welding frequency of the forge welding apparatus 216 to cause the predicted value and the optimal value for the HAZ width to be equal, where the predicted value for the HAZ width is determined, for example, from Equation (7).

In an alternative preferred embodiment for the implementation of the invention for forge welding, the user in step 242 modifies the welding frequency using the control bar 250A on the GUI 214 to cause the predicted HAZ width to be a value which is close to the optimal HAZ width value, and which also provides for a weld having, for example, a desired weld bead smoothness and desired depth into weld vee edge.

Advantageously, the conditions of welding process factors that obtain a predicted value for the at least one quantifiable HAZ characteristic that is at or near the optimal value for the at least one quantifiable HAZ characteristics can be used for welding situations having similar or the same welding apparatuses in accordance with the present invention.

In a preferred embodiment, the system 200 includes a communication device (not shown) which provides that the data processing operations performed at the microcontroller 212 are performed remotely and that the results of such data processing operations are provided via communication means, such as over the Internet, to the system 200.

In a further preferred embodiment, the system 200 is implemented in connection with a fixed frequency pipe and tube welding apparatus 216 and the method 230 is performed by the system 200 to determine and display a quantity related to a predicted HAZ width value for a weld obtained from use of the welding apparatus.

Although preferred embodiments of the present invention have been described and illustrated, it will be apparent to those skilled in the art that various modifications may be made without departing from the principles of the invention

## Claims

1. A method for at least one of monitoring and controlling at least one of a plurality of quantifiable heat affected zone ("HAZ") characteristics in a weld of metal pieces, the method comprising:

   determining, for at least a first of the quantifiable HAZ characteristics, a predicted HAZ characteristic value based on conditions of welding process factors for a weld,
   wherein the welding process factors include geometry and material properties of metal pieces and operating conditions of a welding apparatus;
   determining, for the first quantifiable HAZ characteristic, an optimal HAZ characteristic value for a weld to be performed with the metal pieces; and
   further comprising at least one of steps (a) and (b),
   wherein the step (a) comprises: displaying, for the first quantifiable HAZ characteristic, quantities related to the predicted HAZ characteristic value and the optimal HAZ characteristic value; and
   wherein the step (b) comprises: providing at least one control element for controlling at least one of the operating conditions of the welding apparatus; and controlling the control element to modify the predicted HAZ characteristic value for the first quantifiable HAZ characteristic with respect to the optimal HAZ characteristic value for the first quantifiable HAZ characteristic.

2. The method of claim 1, wherein the quantities related to the predicted HAZ characteristic value and the optimal HAZ characteristic value for the first quantifiable HAZ characteristic are displayed in a comparative format.

3. The method of claim 1, wherein the welding apparatus is for performing high frequency forge welding.

4. The method of claim 1, wherein the pieces of metal to be welded are edges of a strip that is to be fabricated into a pipe or tube.

**5.** The method of claim 1, wherein the determining of the optimal HAZ characteristic value for the first quantifiable HAZ characteristic includes using an optimal HAZ characteristic function.

**6.** The method of claim 5, wherein the optimal HAZ characteristic function is at least one of (i) an analytically derived function, and (ii) an empirically derived function of data representative of at least one of geometry and material properties of metal pieces and operating conditions of a welding apparatus for previously performed welds where the first quantifiable HAZ characteristic satisfies success criteria.

**7.** The method of claim 1, wherein the first quantifiable HAZ characteristic is width of the HAZ.

**8.** The method of claim 1, wherein the determining of the predicted HAZ characteristic value for the first quantifiable HAZ characteristic includes using a predictive HAZ characteristic function.

**9.** The method of claim 8, wherein the predictive HAZ characteristic function is at least one of (i) an analytically derived function, and (ii) an empirically derived function of data representative of at least one of geometry and material properties of metal pieces and operating conditions of a welding apparatus for previously performed welds.

**10.** The method of claim 8, wherein the welding apparatus is for performing high frequency forge welding, the method further comprising:

determining an optimal welding frequency for the forge welding apparatus for the weld to be performed using the predicted HAZ characteristic function for the first quantifiable HAZ characteristic; and
displaying the optimal welding frequency.

**11.** The method of claim 1 further comprising:

displaying a change to the quantity related to the predicted HAZ characteristic value in substantially real time, based on a change to at least one of the operating conditions of the welding apparatus and the geometry and material properties of the metal pieces.

**12.** The method of claim 1 further comprising:

displaying on a graphical display a quantity related to the predicted HAZ characteristic value normalized by the optimal HAZ characteristic value.

**13.** The method of claim 1, wherein the method includes the step (b) and wherein the controlling includes controlling the control element for matching or substantially matching the predicted HAZ characteristic value for the first quantifiable HAZ characteristic to the optimal HAZ characteristic value for the first quantifiable HAZ characteristic.

**14.** The method of claim 1, wherein the method includes the step (b), wherein the welding apparatus is a forge welding apparatus and wherein the operating conditions of the forge welding apparatus controllable by the at least one control element includes welding frequency, welding power, vee length and mill speed.

**15.** The method of claim 1, wherein the method includes the step (b), wherein the control element includes at least one virtual control bar on a graphical user interface ("GUI") and wherein a quantity related to a change to the predictive HAZ characteristic value for the first quantifiable HAZ characteristic based on controlling of the control bar is displayed on the GUI in substantially real time.

**16.** The method of claim 15, wherein the control bar is welding frequency of the welding apparatus.

**17.** The method of claim 15, wherein the control bar is welding power of the welding apparatus.

**18.** A system for at least one of monitoring and controlling at least one of a plurality of quantifiable heat affected zone ("HAZ") characteristics in a weld of metal pieces, the system comprising:
a microcontroller for:

determining, for at least a first of the quantifiable HAZ characteristics, a predicted HAZ characteristic value based on conditions of welding process factors for a weld, wherein the welding process factors include geometry and material properties of metal pieces and operating conditions of a welding apparatus;
determining, for the first quantifiable HAZ characteristic, an optimal HAZ characteristic value for a weld to be performed with the metal pieces; and

further comprising at least one of modules (a) and (b),
wherein the module (a) comprises: a display coupled to the microcontroller and for displaying, for the first quantifiable HAZ characteristic, quantities related to the predicted HAZ characteristic value and the optimal HAZ characteristic value; and
wherein the module (b) comprises: at least one control element coupled to the microcontroller, wherein the control element is for coupling to, and for controlling at least one of the operating conditions of, the welding apparatus, and wherein the control element is controllable to modify the predicted HAZ characteristic value for the first quantifiable HAZ characteristic with respect to the optimal HAZ characteristic value for the first quantifiable HAZ characteristic.

19. The system of claim 18, wherein the quantities related to the predicted HAZ characteristic value and the optimal HAZ characteristic value for the first quantifiable HAZ characteristic are displayed in a comparative format on the display.

20. The system of claim 18, wherein the welding apparatus is for performing high frequency forge welding.

21. The system of claim 18, wherein the pieces of metal to be welded are edges of a strip that is to be fabricated into a pipe or tube.

22. The system of claim 18, wherein the determining of the optimal HAZ characteristic value for the first quantifiable HAZ characteristic includes using an optimal HAZ characteristic function.

23. The system of claim 22, wherein the optimal HAZ characteristic function is at least one of (i) an analytically derived function, and (ii) an empirically derived function of data representative of at least one of geometry and material properties of metal pieces and operating conditions of a welding apparatus for previously performed welds where the first quantifiable HAZ characteristic satisfies success criteria.

24. The system of claim 18, wherein the first quantifiable HAZ characteristic is width of the HAZ.

25. The system of claim 18, wherein the determining of the predicted HAZ characteristic value for the first quantifiable HAZ characteristic includes using a predictive HAZ characteristic function.

26. The system of claim 25, wherein the predictive HAZ characteristic function is at least one of (i) an analytically derived function, and (ii) an empirically derived function of data representative of at least one of geometry and material properties of metal pieces and operating conditions of a welding apparatus for previously performed welds.

27. The system of claim 25, wherein the welding apparatus is for performing high frequency forge welding, and wherein the microcontroller is for:

determining an optimal welding frequency for the forge welding apparatus for the weld to be performed using the predicted HAZ characteristic function for the first quantifiable HAZ characteristic; and
wherein the optimal welding frequency is displayed on the display.

28. The system of claim 18, wherein a change to the quantity related to the predicted HAZ characteristic value is displayed in substantially real time on the display based on a change to at least one of the operating conditions of the welding apparatus and the geometry and material properties of the metal pieces.

29. The system of claim 18, wherein the display is a graphical display and displays a quantity related to the predicted HAZ characteristic value normalized by the optimal HAZ characteristic value.

30. The system of claim 18, wherein the system includes the module (b) and wherein the control element is controllable for matching or substantially matching the predicted HAZ characteristic value for the first quantifiable HAZ characteristic to the optimal HAZ characteristic value for the first quantifiable HAZ characteristic.

31. The system of claim 18, wherein the system includes the module (b), wherein the welding apparatus is a forge welding apparatus and wherein the operating conditions of the forge welding apparatus controllable by the at least one control element include welding frequency, welding power, vee length and mill speed.

32. The system of claim 18, wherein the system includes the module (b), wherein the control element includes at least one virtual control bar on a graphical user interface ("GUI"), wherein a quantity related to a change to the predictive HAZ characteristic value for the first quantifiable HAZ characteristic based on controlling the control bar is displayed on the GUI in substantially real time.

33. The system of claim 32, wherein the control bar is welding frequency of the welding apparatus.

34. The system of claim 32, wherein the control bar is welding power of the welding apparatus.

# FIG. 1

Prior Art

Prior Art

FIG. 2(a)

118

$X_E$

118

$0.5X_E$

Prior Art

h

FIG. 2(b)

# FIG. 3

200

216
Welding
Apparatus

212

220
Predicted HAZ
Characteristic
Value
Module

214
GUI

222
Optimal
HAZ
Characteristic
Value Module

224
Control
Module

# FIG. 4

**230**

Obtain Welding Process Factors Data — **232**

↓

Determine Predicted HAZ Characteristic Value — **234**

↓

Determine Optimal HAZ Characteristic Value — **236**

↓

Determine Optimal Value for a Welding Process Factor that Achieves an Optimal HAZ Characteristic Value — **238**

↓

Display Optimal Value for Welding Process Factor, Optimal HAZ Characteristic Value and Predicted HAZ Characteristic Value — **240**

↓

Display Control Bars and Predicted and Comparative HAZ Characteristic Information — **242**

# HAZ Control System

## Set-up the Tube Making Situation:

Tube Diameter
`4.0`
Inches

Wall Thickness
`0.156`
Inches

Mill Speed
`270.0`
Feet/Minute

Vee Length
`6.0`
Inches

Max Welder Power
`400.0`
kiloWatts

Welding Process
`Induction`

Internal Bead Scarfing?
`Yes`

Set Up Problem

252

Welder Power 400 kW

Welding Frequency 316 kHz

Desired HAZ Width 0.042 Inches

Calculated Actual HAZ Width 0.046 Inches

250B

250A

Power

HAZ Width

Relative Welding Power

Relative HAZ Width

FIG. 5

**EP 1 782 911 A2**

**REFERENCES CITED IN THE DESCRIPTION**

**Patent documents cited in the description**

- US 2774857 A
- US 3037105 A
- US 4197441 A
- US 5902506 A
- US 5954985 A